# EUROPEAN PATENT SPECIFICATION

(11) **EP 1 147 348 B1**
(45) Date of publication and mention of the grant of the patent: **03.03.2004**
(21) Application number: 99960079.4
(22) Date of filing: 03.12.1999
(51) Int. Cl.: F24J 3/08

(54) **SOIL HEAT EXCHANGER AND A METHOD FOR ACHIEVING SUCH A HEAT EXCHANGER**
GRUNDWÄRMETAUSCHER UND VERFAHREN ZU DESSEN HERSTELLUNG
ECHANGEUR DE CHALEUR DE SOL ET SON PROCEDE D'ELABORATION

(30) Priority: 03.12.1998 SE 9804199
(43) Date of publication of application: 24.10.2001
(73) Proprietor: Lowte AB, 193 40 Sigtuna (SE)
(72) Inventor: PLATELL, Ove, S-193 40 Sigtuna (SE)
(74) Representative: Waldinger, Ake
(86) International application number: PCT/SE1999/002260
(87) International publication number: WO 2000/036343

(56) References cited:
- CH-A5- 658 513
- DE-A1- 4 329 269
- SE-B- 458 061
- US-A- 4 715 429
- US-A- 4 867 229

## Description

The present invention relates to a soil heat exchanger of the kind set forth in the preamble of the following claim 1, and a method for achieving such a heat exchanger.

Soil heat exchangers of this type are known from the Swedish patent documents SE 450 289 and SE 458 061. These known soil heat exchangers having circulation systems for the heat transferring liquid in the shape of two concentric legs show an efficiency that is far superior than the efficiency of other known soil heat exchangers having a U-shaped circulation system for the heat transferring liquid. The drawback is partly the difficulty to feed down the circulation system at the installation, partly the difficulty to obtain a good thermal contact between the wall of the soil hole and the outer leg. A soil hole is usually more than 50 meters deep and is filled with water up to the groundwater level. Even if the circulation system is heavy enough for sinking down in the water there will be a demand for further sinking capacity due to friction between the wall of the soil hole and the outer leg that has to be pressed against the wall of the soil hole to obtain a reasonably good thermal contact between said leg and wall in the active condition of the circulation system. The wall of the soil hole usually is rough and a contact pressure that is too high during the feeding down gives rise to damages on the outer leg if it consists of a material like plastics or metal foil coated plastics or another economically acceptable material suitable for this application.

The object of the present invention is to achieve a soil heat exchanger of the type set forth in the introduction which is uncomplicated to manufacture and to install without risk for damages of principally the outer leg, and which shows an essentially improved thermal contact between the outer leg and the surrounding wall of the soil hole. The object of the invention is also to achieve a simplified and safer method for achieving such a soil heat exchanger.

This is achieved according to the invention in that the outer leg of the soil heat exchanger is manufactured with two stable positions, that is one radially retracted position at a distance from the wall of the soil hole in inactive condition, and one radially expanded position in active condition in which the outer leg is pressed against the wall of the soil hole. This means, that with the outer leg in radially retracted position the circulation system easily can be fed down into the soil hole without any risk for the outer leg to be damaged against even a very rough wall of the soil hole, for instance a drill hole in a rock. With the circulation circuit in position the outer leg is transferred to the radially expanded position, in which it is pressed to a good thermal contact with the wall of the soil hole.

The transfer to the radially expanded position can be carried out in two principally different ways, that is preferably by the channels being made such, that they when pressurized by the circulation liquid change shape more or less and by that influence the outer leg to achieve an increased radius of curvature and by that is pressed against the wall of the soil hole, or by the outer leg in the radially retracted position being possible to be influenced by means for pumping water from the soil hole to the channels and thereby transfers the outer leg to the radially expanded position. This latter method may be suitable in many cases but need a separate channel system for the influence of the outer leg, which doubtless may be a drawback.

In accordance with the first-mentioned principle the soil heat exchanger suitably is characterized as set forth in claim 2 or claim 3. In accordance with the other principle the soil heat exchanger may be characterized as set forth in claim 4.

The circulation system in a soil hole, that is the inner and outer legs, have a considerable buoyancy that at the installation increases with the deep to which the system is fed down. Therefore, the central, heat-insulated pipe is, according to an embodiment of the invention, provided with weights attached with certain intervals to counterbalance at least buoyancy of the heat-insulated pipe in a soil hole filled with water, as set forth in claim 5. The weights are suitably clasped to the heat-insulation of the pipe, which, if possible, may be performed in connection with feeding down of the legs such, that the weight of the weights increases in proportion to the deep. The weight should preferably be adapted such that a slight braking is needed during the feeding down operation such that the legs are kept straight.

The method according to the invention is characterized as set forth in claim 6. In this way the installation is easily performed by synchronous feeding down of the two legs with the outer leg shaped such that it has an essentially smaller cross-section dimension than the soil hole. Moreover, the circulation system is provided with channels shaped such that, if they are subjected to inner water pressure, they change shape and influence the outer leg to expand radially and press against the wall of the soil hole.

A preferable method for achieving the heat exchanger according to the invention is characterized as set forth in claim 7. In this way the outer leg and the inner leg prefabricated and winded each on a bobbin and with the connections between the bottom ends of the channels of the outer leg and the bottom end of the pipe of the inner leg prefabricated are transported to the installation site where they are fed down in a soil hole. At the same time weights can be clasped gradually to the central pipe of the inner leg, as set forth in claim 8.

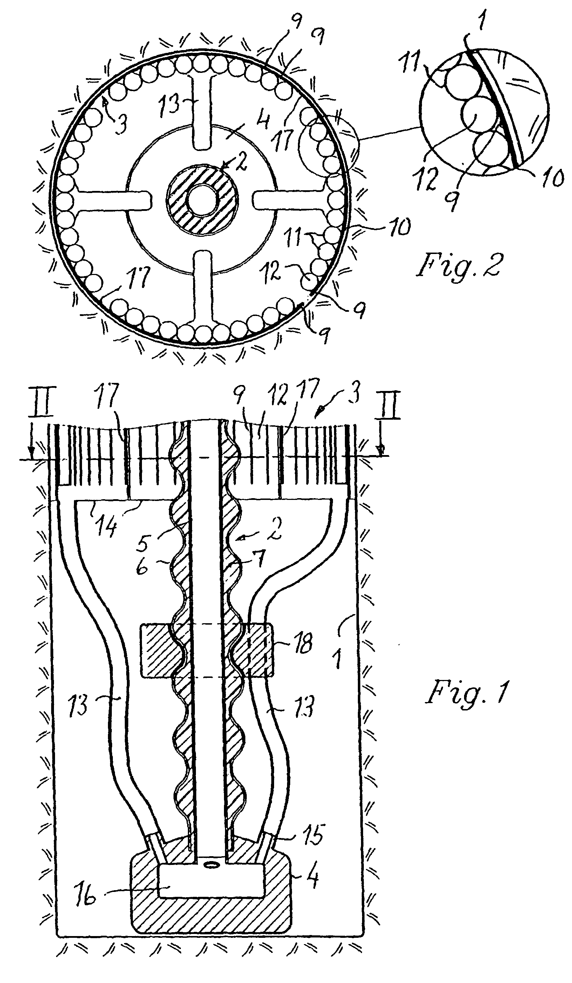

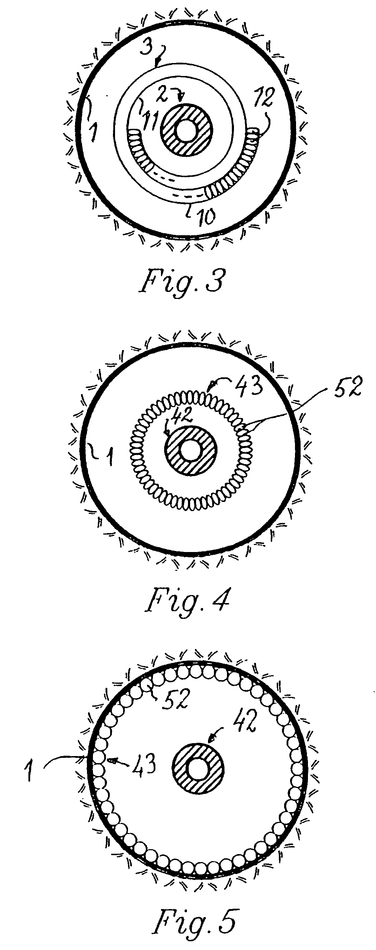

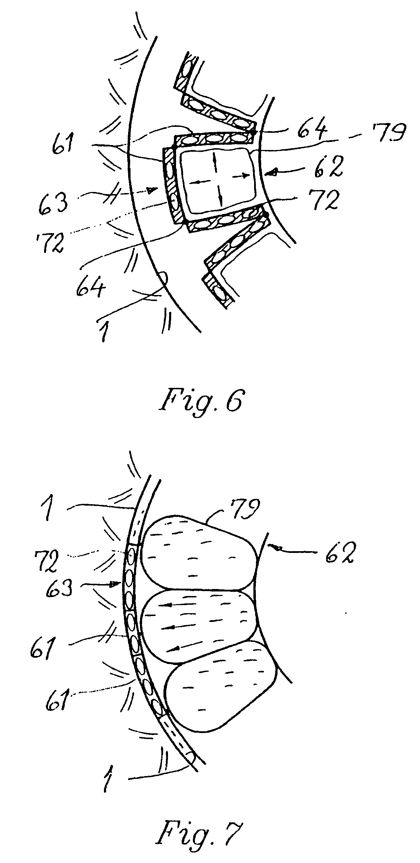

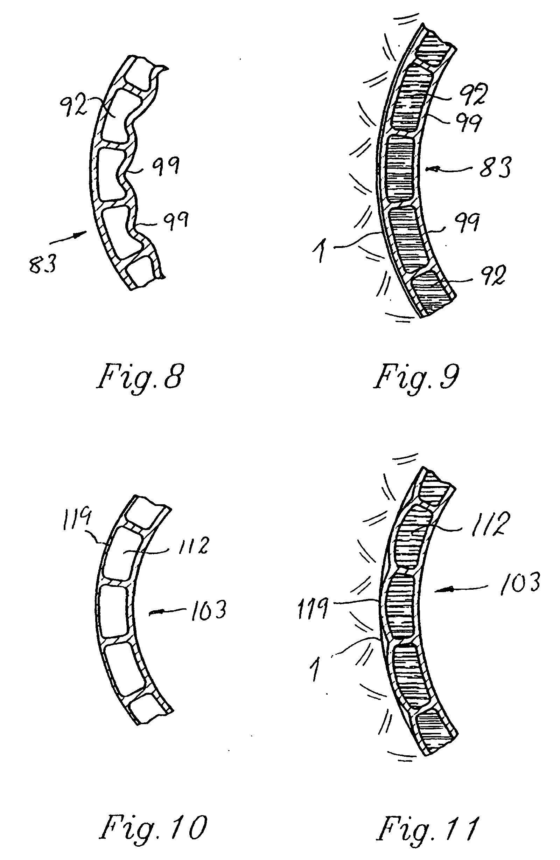

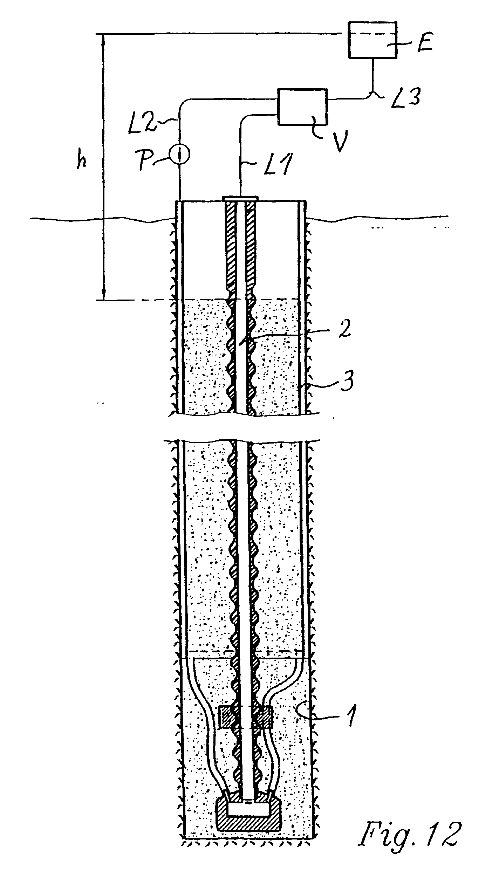

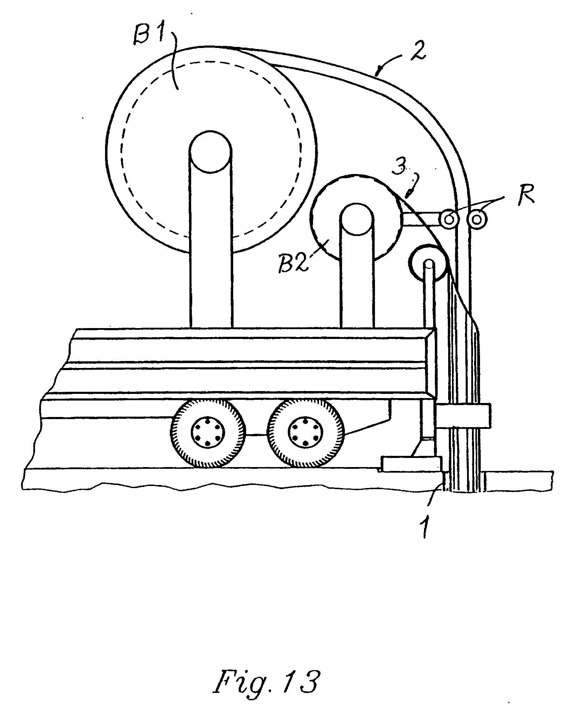

The invention will be more completely described in the following with reference to the attached drawings, which schematically disclose by example different embodiments of soil heat exchangers according to the invention, in which Figure 1 is a longitudinal section of the bottom part of a soil heat exchanger according to an embodiment of the invention, Figure 2 is cross-section along line II-II in Fig.1, Figure 3 is a cross-section of a soil hole showing especially the shape of the outer leg in Fig.1 in radially retracted condition, Figures 4 and 5 are the same cross-section as Fig.3 showing another embodiment of the outer leg in radially retracted and expanded, respectively, condition, Figures 6 and 7 are similar partial sections as those shown above showing a further embodiment of the outer leg in radially retracted and expanded, respectively, condition, Figures 8 and 9 are similar partial sections as those shown above showing a further embodiment of the outer leg in radially retracted and expanded, respectively, condition, Figures 10 and 11 are the same partial sections as shown in Figs. 8 and 9, respectively, of a modification of the embodiment shown in Figs. 8 and 9, Figure 12 is a longitudinal section of a soil hole containing a circulation circuit, and Figure 13 is a side view showing the rear part of a truck carrying an equipment for carrying out a soil heat exchanger.

Figures 1 and 2 show a first embodiment of a soil heat exchanger according to the invention. A drill hole 1 to a deep of for instance 75 meters is made in hard soil, for instance in a rock. A circulation system comprising an inner leg 2 and an outer leg 3 are immersed into the soil hole with a connection house 4 attached to the bottom end of the inner leg 2 and positioned on the bottom of the hole 1.

The inner leg 2 consists of a pipe 5 surrounded by a corrugated pipe 6 and heat-insulating layer 7 between the pipes. The outer leg 3 has the shape of a mat comprising a comparatively thick-walled, strong plastic foil 10 having a width essentially equal to the circumference of the soil hole 1 and a length corresponding to the deep of the soil hole 1. A thinner plastic foil 11 is welded to the foil 10 by parallel welding seams 9 forming a great number of channels 12 and a number-here four- of connecting channels 13, which connect a corresponding number of sections 14 of channels 12 with connections 15 to the inner 16 of the connection house 4, in which also the pipe 5 ends. The top of the sections 14 (not shown) and the bottom of the sections are designed with collecting channels which connect the channels 12 of each section with each a connecting channels 13 and corresponding channels at the top (not shown) for forming a closed circulation circuit as will be described more in detail in connection with Fig.12. The sections 14 are separated by welding seams 17.

Figs.1 and 2 show the plastic foil 10 of the outer leg 3 pressed as hard as possible against the wall of the soil hole 1 for achieving a thermal contact with the wall that is as good as possible. The outer leg 3 must have a considerably smaller cross-section area than the soil hole 1 to enable the feeding down of the legs 2,3. For that reason is the outer leg 3 manufactured with the helically twisted cross sectional shape shown in Fig.3 and with the oval channels 12 attached to the thicker plastic foil 10. Vfien the legs 2,3 are fed down into the soil hole 1, which is filled with ground water, weights 18 are clasped to the corrugated pipe 6 with certain intervals for counterbalancing the buoyancy of the legs. Also the house 4 is manufactured of a heavy material for forming a weight too.

Along with the feeding down of the legs 2,3 into the soil hole filled with water the channels 12 are filled with circulation water, and when the channels are positioned in the intended place the channels 12 are filled with circulation water to a pressure somewhat higher than the surrounding ground water such that the channels 12 are swelled laterally and influence the foil 10 to increase its radius of curvature to finally reach the same radius of curvature as the soil hole 1, as shown in Figs.1 and 2. How this favourable working operation is performed in detail is described in connection with Fig.13.

If for some reason the circulation circuit 2,3 has to be pulled up from the soil hole 1 it is possible to reduce the water pressure in the channels 12 permitting them to collapse laterally such that the foil 10 is bent to the original twisted shape shown in Fig.3, after which both legs 2,3 can be pulled up without scraping against the wall of the soil hole to any appreciable extent.

Another embodiment is shown in Figs.4 and 5. As shown in Fig.4 an outer leg 43 here is formed by channels 52 of flexible plastic material which are parallel to the an inner leg 42 and are in cross section extremely oval and connected side by side forming a tube shaped member completely surrounding the inner leg 42 at a distance from the wall 1 of a soil hole. In this case the inner leg 42 has to be provided from the beginning with weights (not shown) positioned with suitable intervals because the inner leg 42 is inaccessible during the installation. When the legs 42,43 are in the intended place in the soil hole, are the channels 52, which during the feeding down are filled up with water, filled with circulation liguid of a higher pressure than the surrounding ground water such that the channels 52 are expanded laterally and the radius of curvature and consequently the circumference of the outer leg 43 is increased until the leg 43 is pressed against the wall 1 of the soil hole, as shown in Fig.5. Also in this case is it possible to decrease the circumference of the outer leg 43 again by eliminating the overpressure of the circulation liquid in the channels 52 such that the walls of the channels 52 collapse. The channels 52 may consist of two plastic foils welded together or of extruded plastic material.

Figs.6 and 7 show an embodiment of an outer leg 63 consisting of extruded sections 61 which are attached to each other by flexible joints at longitudinal edges 64 and which enclose channels 72 for circulation liquid. The sections 61 are folded to and fro in the space between the inner leg 62 and the wall 1 of the soil hole and enclose completely the inner leg 62. The outer leg 63 is transformed to its radially expanded shape by filling longitudinal hoses 79 made of easily folded plastic material in the spaces between the sections 61 with ground water when the installation in the soil hole 1 is finished. From that it follows that the sections 61 will become straight to form a ring pressed against the wall 1 of the soil hole.

Figs.8 and 9 show an outer leg 83 formed by extrusion of flexible plastic material to form a helically twisted mat with a width equal to the circumference of the soil hole 1, as shown in Fig.3, and containing essentially rectangular channels 92 for circulation liquid each exposing a wall 99 turned inwards and bent towards the interior of the channel. When the channels 92 are filled with circulation liquid of a higher pressure than the surrounding ground water this will result in that the walls 99 will be plane and the radius of curvature of the outer leg 83 will be increased until it is pressed against the wall 1 of the soil hole.

Figs. 10,11 finally show an embodiment with an outer leg 103 extruded to the same twisted shape and width as shown in Fig.3. As shown in Fig.10 it has essentially rectangular channels 112 each exposing an outwards facing wall (119), which is made thin (Fig.10) or which is locally extruded with a more flexible material (Fig.11) and, accordingly, can be forced to bow outwards when the channel 112 is filled with circulation liquid of a higher pressure than the surrounding ground water such that the outer leg 103 is imparted an increasing radius of curvature until it is pressed against the wall 1 of the soil hole, Fig.11.

Fig.12 discloses a soil hole 1 filled with ground water, in which soil hole an inner leg 2 and an outer leg 3 are installed. The inner leg 2 is connected by a pipe L1 to a heat-producing device V, for instance a solar collecting plant, from which a pipe L2 and a pump P direct hot circulation water to the outer leg 3. An expansion tank E is as usual connected to the circulation circuit by a pipe L3. The water level in the expansion tank E is positioned at the height h above the ground water level, from which is evident, that the circulation water has a corresponding overpressure in relation to the ground water at every deep. At the circulation of the hot water heat is emitted to the surrounding soil with a good efficiency due to the good contact between the outer leg 3 and the wall 1 of the soil hole.

As an alternative heat may be transmitted from heat stored in the soil to the device V.

The soil heat exchanger can of course also be arranged for storing coldness in the soil and for collecting coldness from the soil in a corresponding way.

Fig. 13 discloses how the installation of the circulation circuit shown in Figs. 1-3 can be carried out in a simple way. The inner leg 2 is factory-made and winded on a bobbin B1. The outer leg 3 is also factory-made in the shape of the described mat with the helically twisted shape shown in Fig.3. The mat is folded to a plane condition and winded on a separate bobbin B2. The bobbins are placed on a truck and the feeding ends of the two legs are connected as shown in Fig.1. If the deep of the soil hole is determined the finishing ends of the legs are suitably prepared for connection to the pipes L1,L2 (Fig.12).

By means of the truck the feeding ends of the legs are positioned straight above the soil hole after which the legs are fed down at the same time as the temporarily plane outer leg 3 after the unwinding from the bobbin is permitted to revert to its by the manufacture decided helically twisted shape. Weights 18 (Fig.2) are clasped to the inner leg 2 before it disappears into the outer leg 3. The intervals between the weights are adjusted such that the legs sink down in the ground water in the soil hole with a slight braking of the legs by means of rolls R on the truck.

The invention is of course not restricted to the examples of embodiments here shown and described but can be modified in different ways within the frame of the invention defined in the claims. The outer leg can for example be winded up double-folded on a bobbin with the inner leg enclosed in the outer leg. This applies at least in case of circulation circuits with a limited length. It may be suitable to use lengthening-pieces by means of which shorter legs can be connected to a circulation circuit of considerable length,

## Claims

1. Soil heat exchanger comprising at least one deep, cylindrical hole (1) in the soil and a heat transferring liquid circulating in a closed system (2,3,L1,L2,V) with a leg extending down in the soil hole and a leg extending up from the soil hole, one of the legs (2) comprising a central, heat-insulated pipe and the other leg (3) comprising a plurality of channels (12) connected to each other and parallel to the pipe (2), which channels are in use in good thermal contact with the wall of the soil hole (1) and have their bottom ends (4,13) connected to the bottom end portion of the pipe (2), wherein the outer leg (3) has a thickness decided by the cross section of the channels (12) **characterized in that** the outer leg (3) has two stable positions, that is one radially retracted position at a distance from the wall of the soil hole (1) in inactive condition and one radially expanded position in active condition achieved by change of shape of the leg essentially without elongation of the wall material of the channels, in which position the leg makes contact with the wall of the soil hole (1).

2. Soil heat exchanger according to claim 1, **characterized in that** the outer leg (3,83,103) is shaped in cross section twisted about its longitudinal axis with the channels (12,92,112) made such, that when they are subjected to an inner pressure by the circulation liquid the twist is reduced to circular shape with the leg pressed against the wall of the soil hole (1).

3. Soil heat exchanger according to claim 1, **characterized in that** the outer leg (43) is tubular with a circumference decided by the shape of the pressurized channels (52), which circumference is equal to the circumference of the wall of the soil hole (1).

4. Soil heat exchanger according to any of claims 1-3, **characterized in that** at least one closed member (79) with thin, flexible walls is arranged between the two legs (62,63) and contains water pumped over from the soil hole (1) to keep the outer leg (63) pressed against the wall of the soil hole (1).

5. Soil hole exchanger according to any of claims 1-4, **characterized in that** the central, heat-insulated pipe (2) is provided with weights (18) attached with certain intervals to counterbalance at least buoyancy of the heat-insulated pipe (2) in a soil hole (1) filled with water.

6. Method for achieving a soil heat exchanger according to claim 1, comprising making at least one deep, cylindrical hole (1) in the soil, arranging a circulation circuit for heat transferring liquid in the soil hole, which circulation circuit comprises an inner leg (2) in the shape of a central, heat-insulated pipe and an outer leg (3,43,63,83,103) in the shape of a mat enclosing the pipe, which mat comprises channels (12,52,72,92,112) parallel to the pipe (2) and connected to each other, the bottom ends of which being arranged to communicate with the bottom end of the pipe, **characterized in that** the outer leg before feeding down in the soil hole is permitted to take a prefabricated, radially retracted position around the pipe (2), and is fed down at the same time as the pipe, and after finished feeding down operation is subjected to a water pressure to be pressed against the wall of the soil hole (1) by change of shape of the leg essentially without elongation of the wall material of the channels.

7. Method for achieving a soil heat exchanger according to claim 6, **characterized in that** the elongated mat (3,83,103) made of flexible material is manufactured with a width essentially equal to the circumference of the soil hole (1) and is shaped to form an elongated, in cross-section twisted tube but is unfolded in plane position and winded on a bobbin (B2) like the heat-insulated pipe (2), which is winded on another bobbin (B1), after which the bottom end of the mat is arranged to enclose the bottom end of the pipe (2) and is fed down in the soil hole (1) simultaneously with the pipe (2), which gradually is brought to be enclosed by the mat whose channels (12,92,112) after finished feeding down are filled with pressurized circulation liguid that affects the channels to change form such, that the twisted form of the mat is reduced and the mat is pressed against the wall of the soil hole (1).

8. Method according to claim 7, **characterized in that** weights (18) are attached at certain intervals to the heat insulation (7) of the pipe (2) for counterbalancing the buoyancy of at least the heat insulation when the pipe (2) is fed down into the soil hole (1).

## Patentansprüche

1. Erdwärmetauscher mit wenigstens einem tiefen, zylindrischen Loch (1) in der Erde und einer wärmeübertragenden Flüssigkeit, die in einem geschlossenen System (2, 3, L1, L2, V) mit einem Leitungszweig, der sich nach unten in das Erdloch erstreckt, und einem Leitungszweig, der sich aus dem Erdloch nach oben erstreckt, zirkuliert, wobei einer der Leitungszweige (2) einen zentralen, wärmeisolierten Schlauch und der andere Leitungszweig (3) eine Mehrzahl von Kanälen (12) aufweist, die miteinander verbunden sind, parallel zu dem Schlauch (2) liegen, im Betrieb in gutem thermischen..Kontakt mit der Wand des Erdloches (1) stehen und mit ihren Fußenden (4, 13) mit dem Fußendbereich des Schlauches (2) verbunden sind, und der äußere Leitungszweig (3) eine durch den Querschnitt der Kanäle (12) bestimmte Stärke besitzt, **dadurch gekennzeichnet, daß** der äußere Leitungszweig (3) zwei stabile Stellungen besitzt, nämlich eine radial zurückgezogene Stellung in einem Abstand zu der Wand des Erdloches (1) im inaktiven Zustand und eine radial erweiterte Stellung im aktiven Zustand, die man durch eine Änderung der Form des Leitungszweiges im wesentlichen ohne Dehnung des Wandmaterials der Kanäle erreicht und in welcher der Leitungszweig in Kontakt mit der Wand des Erdloches (1) gelangt.

2. Erdwärmetauscher nach Anspruch 1, **dadurch gekennzeichnet, daß** der äußere Leitungszweig (3, 83, 103) im Querschnitt eine um seine Längsachse spiralförmig eingerollte Form besitzt, wobei die Kanäle (12, 92, 112) derart ausgebildet sind, daß sich dann, wenn sie durch die Zirkulationsflüssigkeit einem Innendruck ausgesetzt sind, die Einrollung zu einer Kreisform hin mit gegen die Wand des Erdloches (1) angedrückten Leitungszweig vermindert.

3. Erdwärmetauscher nach Anspruch 1, **dadurch gekennzeichnet, daß** der äußere Leitungszweig (43) mit einem durch die Form der unter Druck gesetzten Kanäle (52) bestimmten Umfang röhrenförmig ist, wobei der Umfang gleich dem Umfang der Wand des Erdloches (1) ist.

4. Erdwärmetauscher nach einem der Ansprüche 1 bis 3, **dadurch gekennzeichnet, daß** zwischen den beiden Leitungszweigen (62, 63) wenigstens ein geschlossenes Element (79) mit dünnen, flexiblen Wandungen angeordnet ist, das aus dem Erdloch (1) umgepumptes Wasser enthält, um den äußeren Leitungszweig (6) gegen die Wand des Erdloches (1) angedrückt zu halten.

5. Erdwärmetauscher nach einem der Ansprüche 1 bis 4, **dadurch gekennzeichnet, daß** der zentrale, wärmeisolierte Schlauch (2) mit Gewichten (18) versehen ist, die in bestimmten Abständen angebracht sind, um wenigstens den Auftrieb des wärmeisolierten Schlauches (2) in einem mit Wasser gefüllten Erdloch (1) auszugleichen.

6. Verfahren zur Herstellung eines Erdwärmetauschers nach Anspruch 1, umfassend das Herstellen wenigstens eines tiefen, zylindrischen Loches (1) in der Erde und das Aufbauen eines Zirkulationskreislaufes in dem Erdloch für eine wärmeübertragende Flüssigkeit, wobei der Zirkulationskreislauf einen inneren Leitungszweig (2) in der Form eines zentralen, wärmeisolierten Schlauches (2) und einen äußeren Leitungszweig (3, 43, 63, 83, 103) in der Form einer den Schlauch umschlingenden Matte aufweist, die parallel zu dem Schlauch (2) liegende und miteinander verbundene Kanäle (12, 52, 72, 92, 112) besitzt, deren Fußenden zur Kommunikation mit dem Fußende des Schlauches ausgebildet sind, **dadurch gekennzeichnet, daß** es dem äußeren Leitungszweig vor dem Herablassen in das Erdloch ermöglicht wird, eine vorgefertigte, radial zurückgezogene Stellung um den Schlauch (2) einzunehmen, und der äußere Leitungszweig gleichzeitig mit dem Schlauch abgelassen und nach der Beendigung des Ablaßvorganges einem Wasserdruck ausgesetzt wird, um durch eine Veränderung der Form des Leitungszweiges im wesentlichen ohne Dehnung des Wandmaterials der Kanäle gegen die Wand des Erdloches (1) gedrückt zu werden.

7. Verfahren zur Herstellung eines Erdwärmetauschers nach Anspruch 6, **dadurch gekennzeichnet, daß** die längliche Matte (3, 83, 103) aus flexiblem Material mit einer Weite, die im wesentlichen dem Umfang des Erdloches (1) entspricht, hergestellt und derart geformt wird, daß sie eine längliche, im Querschnitt eingerollte Röhre bildet, aber in eine ebene Stellung gefaltet und auf eine Rolle (B2) aufgewickelt wird, wie der wärmeisolierte Schlauch (2), der auf einer anderen Rolle (B1) aufgewickelt wird, wonach das Fußende der Matte zum Umschließen des Fußendes des Schlauches (2) angeordnet und gleichzeitig mit dem Schlauch (2) in das Erdloch (1) hinabgelassen wird, der allmählich fortschreitend mit der Matte umschlossen wird, deren Kanäle (12, 92, 112) nach Beendigung des Herablassens mit unter Druck stehender Zirkulationsflüssigkeit befüllt werden, die die Kanäle dazu bringt, ihre Form derart zu ändern, daß der Grad der Einrollung der Matte vermindert wird und diese gegen die Wand des Erdloches (1) gedrückt wird.

8. Verfahren nach Anspruch 7, **dadurch gekennzeichnet, daß** in bestimmten Abständen Gewichte (18) an der Wärmeisolierung des Schlauches (2) angeordnet werden, um den Auftrieb wenigstens der Wärmeisolation auszugleichen, wenn der Schlauch in das Erdloch (1) abgelassen wird.

## Revendications

1. Échangeur de chaleur de sol comprenant au moins un trou cylindrique profond (1) dans le sol et un liquide de transfert de chaleur circulant dans un système fermé (2, 3, L1, L2, V) avec un jambage s'étendant vers le bas dans le trou du sol et un jambage s'étendant vers le haut depuis le trou du sol, l'un des jambages (2) comprenant un tuyau central thermiquement isolé et l'autre jambage (3) comprenant une pluralité de canaux (12) reliés les uns aux autres et parallèles au tuyau (2), canaux qui sont en bon contact thermique pendant l'utilisation avec la paroi du trou du sol (1) et ont leurs extrémités inférieures (4, 13) reliées à la partie d'extrémité inférieure du tuyau (2), dans lequel le jambage externe (3) a une épaisseur régie par la section transversale des canaux (12) et **caractérisé en ce que** l'autre jambage (3) présente deux positions stables, à savoir, une position radialement rétractée à une certaine distance de la paroi du trou du sol (1) en condition inactive et une position radialement dilatée en condition active, obtenue en modifiant la forme du jambage sensiblement sans allongement du matériau de paroi des canaux, position dans laquelle le jambage est en contact avec la paroi du trou du sol (1).

2. Échangeur de chaleur de sol selon la revendication 1, **caractérisé en ce que** le jambage externe (3, 83, 103) est, en section transversale, formé par torsion autour de son axe longitudinal, les canaux (12, 92, 112) étant réalisés de telle sorte que lorsqu'ils sont soumis à une pression interne par le liquide de circulation, la torsion est réduite à une forme circulaire, le jambage étant appuyé contre la paroi du trou du sol (1).

3. Échangeur de chaleur de sol selon la revendication 1, **caractérisé en ce que** le jambage externe (43) est tubulaire avec une circonférence régie par la forme des canaux sous pression (52), circonférence égale à la circonférence de la paroi du trou du sol (1).

4. Échangeur de chaleur de sol selon l'une quelconque des revendications 1 à 3, **caractérisé en ce qu'**au moins un élément fermé (79) avec des parois minces, souples, est agencé entre les deux jambages (62, 63) et contient de l'eau pompée à partir du trou du sol (1) pour maintenir le jambage externe (63) appuyé contre la paroi du trou du sol (1).

5. Échangeur de chaleur de sol selon l'une quelconque des revendications 1 à 4, **caractérisé en ce que** le tuyau central thermiquement isolé (2) est muni de poids (18) fixés selon certains intervalles pour équilibrer au moins la flottabilité du tuyau thermiquement isolé (2) dans un trou de sol (1) rempli d'eau.

6. Procédé pour réaliser un échangeur de chaleur de sol selon la revendication 1, comprenant la réalisation d'au moins un trou cylindrique profond (I) dans le sol, l'agencement d'un circuit de circulation pour un liquide de transfert de chaleur dans le trou du sol, circuit de circulation comprenant un jambage interne (2) sous la forme d'un tuyau central thermiquement isolé et un jambage externe (3, 43, 63, 83, 103) sous la forme d'un mât renfermant le tuyau, mât comprenant des canaux (12, 52, 72, 92, 112) parallèles au tuyau (2) et reliés les uns aux autres, dont les extrémités inférieures sont agencées pour communiquer avec l'extrémité inférieure du tuyau, **caractérisé en ce que** le jambage externe, avant d'être enfoncé dans le trou du sol, peut prendre une position préfabriquée radialement rétractée autour du tuyau (2) et est descendu en même temps que le tuyau, et après avoir terminé l'opération de descente, est soumis à une pression d'eau pour être appuyée contre la paroi du trou du sol (1) en modifiant la forme du jambage sensiblement sans allongement du matériau de paroi des canaux.

7. Procédé pour réaliser un échangeur de chaleur de sol selon la revendication 6, **caractérisé en ce que** le mât allongé (3, 83, 103) fait d'un matériau souple est fabriqué avec une largeur sensiblement égale à la circonférence du trou du sol (1) et est mis en forme de manière à former un tube allongé, en torsion en section transversale, mais est déplié en position plane et enroulé sur une bobine (B2), comme le tuyau thermiquement isolé (2), qui est enroulé sur une autre bobine (B1), après quoi l'extrémité inférieure du mât est agencée pour renfermer l'extrémité inférieure du tuyau (2) et est descendue dans le trou du sol (1) en même temps que le tuyau (2) qui est progressivement amené à être enfermé par le mât dont les canaux (12, 92, 112) après avoir fini d'être descendus, sont remplis d'un liquide de circulation sous pression qui agit sur les canaux pour modifier la forme, de telle sorte que la forme en torsion du mât est réduite et le mât est appuyé contre la paroi du trou du sol (1).

8. Procédé selon la revendication 7, **caractérisé en ce que** des poids (18) sont fixés selon certains intervalles à l'isolation thermique (7) du tuyau (2) pour équilibrer la flottabilité au moins de l'isolation thermique lorsque le tuyau (2) est descendu dans le trou du sol (1).
